# EUROPÄISCHE PATENTSCHRIFT

(11) **EP 0 946 252 B1**
(45) Veröffentlichungstag und Bekanntmachung des Hinweises auf die Patenterteilung: **14.03.2001**
(21) Anmeldenummer: 97912132.4
(22) Anmeldetag: 07.10.1997
(51) Int. Cl.: B01D 46/24

(54) **FILTEREINSATZ**
FILTER INSERT
CARTOUCHE FILTRANTE

(30) Priorität: 06.11.1996 DE 19645666
(43) Veröffentlichungstag der Anmeldung: 06.10.1999
(73) Patentinhaber: FILTERWERK MANN & HUMMEL GmbH, 71631 Ludwigsburg (DE)
(72) Erfinder: ERDMANNSDÖRFER, Hans, D-75335 Dobel (DE)
(74) Vertreter: Voth, Gerhard, Dipl.-Ing.
(86) Internationale Anmeldenummer: EP9705511
(87) Internationale Veröffentlichungsnummer: WO9819772

(56) Entgegenhaltungen:
- EP-A- 0 695 572
- DE-A- 3 017 852
- DE-A- 4 342 406
- GB-A- 1 490 270
- US-A- 4 759 782

## Beschreibung

Die Erfindung betrifft einen Filtereinsatz zum Abscheiden von Öl aus einem Gasstrom nach der Gattung des Patentanspruches 1. Derartige Filtereinsätze sind bekannt, z. B. aus der GB 1 490 270. Es ist ein Filtereinsatz zum Abscheiden von Öl aus einem Gasstrom beschrieben, wobei der Filtereinsatz eine Reingasseite und eine Rohgasseite aufweist. Diese sind durch gasdurchlässige Mittel zum Stützen miteinander kommunizierend verbunden, wobei dieses als Träger für zwei unterschiedlich feine Abscheidebereiche verwendet wird. Die Abscheidebereiche können z. B. aus einer nicht gewebten Glasfasermatte und aus einem Polyurethanschaum bestehen.

In der EP 695 572 A1 ist ein Ölabscheider für Luft offenbart, der zwei um Stützkörper angeordnete Coalescerelemente aufweist, die aus einem gewickelten Vlies bestehen können. Die vorgeschlagenen Alternativen für gewickelte Filterelemente machen jedoch eine Fixierung an den jeweiligen Stirnseiten des Filterelementes notwendig.
Dies kann z. B. durch Endkappen erfolgen, die mit dem Filtermaterial verklebt oder verschweißt werden können. Dadurch entsteht ein komplizierter Aufbau der Filterelemente, wodurch die Wirtschaftlichkeit der vorgeschlagenen Lösung leidet.

Aufgabe der Erfindung ist es, einen zuverlässig funktionierenden sowie einfach und billig herzustellenden Filtereinsatz zu schaffen. Diese Aufgabe wird durch die Merkmale des Patentanspruches 1 gelöst.

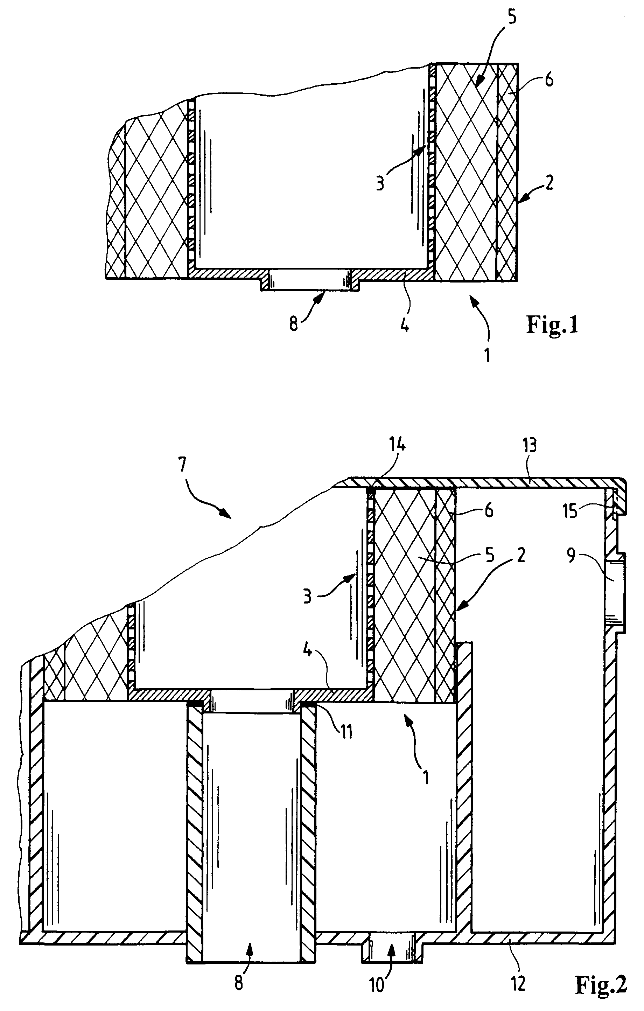

Erfindungsgemäß wird die Aufgabe dadurch gelöst, dass der Abscheidebereich aus gewickeltem Garn hergestellt wird. Auf eine Endkappe des Filterelementes kann daher verzichtet werden (vergl. Figur 1). Dadurch lässt sich das Filterelement auf wirtschaftliche Weise herstellen.

In einer anderen vorteilhaften Weiterbildung ist vorgesehen, daß ein Abscheidebereich aus zusammenhängenden Fasern oder Elementarfäden besteht und somit einen Feinanteil aufweist. Dieser Feinanteil übernimmt die Ölabscheidung im Bereich kleinerer Ölteilchen.
Dieser auch als Vlies bezeichnete Bereich schützt zusätzlich zu seiner Abscheide- und Ableitungswirkung bezüglich des Öls im Gas den gewickelten Abscheidebereich des Filterelementes, der, insbesondere wenn er aus Glasfasern besteht, sehr empfindlich gegenüber mechanischen Belastungen ist; zusätzlich bildet er den räumlichen Abschluß des Filterelements im Sinne eines Gehäuses, um auf eine weitere Verpackungsumhüllung zu verzichten.

Eine weitere vorteilhafte Weiterbildung sieht vor, daß das Material des Abscheidebereichs aus Kunststoffen, wie Polyester, -amid, -acryl oder Aramid, Metall oder Metalloxid besteht. Von besonderem Vorteil ist die Verwendung eines texturierten Filamentgames. Die Kombination bei texturiertem Garn von geringem Filamentdurchmesser und hohem Volumen sorgt für ein gutes Ergebnis bei der Ölabscheidung, z.B. im Aerosolbereich, da gerade in Motoren, die den ständig steigenden Anforderungen an die Schadstoffbelastung im Abgas genügen sollen, ein hoher Ölabscheidegrad bei geringem Druckverlust und gleichzeitigem Vermeiden des Zusetzens durch beispielsweise Rußpartikel
von Bedeutung ist, wobei Einzelfasern vorzugsweise kleiner 10 µm sind.

Gerade in diesem Größenordnungsbereich erfolgt die Ölabscheidung aus Aerosolen besonders effektiv.

In einer weiteren vorteilhaften Weiterbildung ist vorgesehen, daß das Material wenigstens eines Abscheidebereichs elektrostatische Eigenschaften aufweist, was den Vorgang der Ölabscheidung verbessert.

In einer anderen vorteilhaften Weiterentwicklung der Erfindung ist vorgesehen, daß wenigstens ein Abscheidebereich hydrophobe oder hydrophile Eigenschaften aufweist; dies führt zu einem beeinflußbaren Abscheideverhalten im Filterelement.

Eine weitere vorteilhafte Weiterbildung der Erfindung sieht vor, daß in einer Vorrichtung zum Ölnebelabscheiden ein Filterelement verwendbar ist. Dies macht deutlich, daß derartige Filterelemente universell, z.B. in Rohrquerschnitten oder aber in beinahe beliebig geformten Gehäusen einsetzbar sind.

In einer anderen vorteilhaften Weiterbildung der Erfindung ist vorgesehen, daß die Vorrichtung zum Ölnebelabscheiden insbesondere im Ansaugtrakt von Verbrennungskraftmaschinen einsetzbar ist. Der Einsatz einer solchen Vorrichtung, insbesondere im Ansaugtrakt einer Verbrennungskraftmaschine, hat vorbeugenden Charakter hinsichtlich der Emissions- als auch der Verschmutzungssituation innerhalb der Maschine, speziell im Hinblick auf die Situation der Lebensdauer der Funktionselemente wie beispielsweise eines Turboladers oder Ölkühlers und ähnlicher Teile.

In einer weiteren vorteilhaften Weiterbildung der Erfindung ist vorgesehen, daß die Ölnebelabscheidevorrichtung zum Entölen der Blow-by-Gase einer Verbrennungskraftmaschine einsetzbar ist. Z.B. in Dieselmotoren, vorwiegend mit Turboladern gilt es, die Beaufschlagung sowohl der Turbinenschaufeln als auch der anderen Funktionselemente mit ölhaltigen Gasen zu vermeiden, um sowohl Schäden als auch zusätzliche Schadstoffbeaufschlagungen zu vermeiden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Zeichnungen zeigen:
- Figur 1: einen Schnitt durch ein Filterelement
- Figur 2: einen Schnitt durch eine Vorrichtung zum Ölnebelabscheiden

Das Filterelement 1 weist, wie in Figur 1 dargestellt, eine Reingasseite 2 und eine Rohgasseite 3 auf. Vorzugsweise verfügt das Filterelement 1 über rohgasseitige Mittel zum Stützen 4. Das in Figur 1 dargestellte Mittel zum Stützen 4 besteht aus einem einteiligen, rohrförmigen Lochblech, das von einem ersten Abscheidebereich 5 umgeben ist. Dieser Abscheidebereich 5 besteht aus um das rohrförmige Lochblech gewickeltes Glasfasergarn, welches das Mittel zum Stützen bildet. Um den Glasfaserwickel herum, der den ersten Abscheidebereich 5 bildet, ist ein zweiter Abscheidebereich 6 angeordnet. Der zweite Abscheidebereich 6 besteht im in Figur 1 dargestellten Ausführungsbeispiel aus einem Vlies, das gleichzeitig die äußere Begrenzungshülle des Filterelementes 1 darstellt. Das Filterelement 1 weist eine Gaszuführöffnung 8 auf, über die das zu entölende Gasgemisch zugeführt wird. Diese Gaszuführöffnung 8 ist an der Stimseite des Mittels zum Stützen 4 angeordnet. Über diese Gaszuführöffnung 8 gelangt das Gasgemisch ins Innere des Filterelements 1, von wo aus das ölhaltige Gasgemisch radial über die an der Mantelfläche des Stützmittels 4 befindlichen Löcher in den folgenden Abscheidebereich 5 gelangt. Bereits durch das Passieren des Lochbleches des Stützmittels erfährt das Gasgemisch eine Entmischung in der Weise, daß sich Öltropfen aus dem Gasgemisch abscheiden, die sich dann im ersten Abscheidebereich entlang der Glasfasergamstruktur zum Erdmittelpunkt bewegen. Nachdem das Gasgemisch das Lochblech 4 überwunden hat, gelangt es in den ersten Abscheidebereich 5, in dem sich größere Öltröpfchen an der Oberfläche der Glasfasergarnwickelstruktur niederschlagen, die sich ebenfalls mittels der Schwerkraft vom Gasstrom wegbewegen. Im Anschluß daran gelangt der Gasstrom mit dem verbliebenen Ölanteil in den zweiten Abscheidebereich 6, in dem sich kleinere Öltröpfchen des Gasgemisches an der Oberfläche der wesentlich feineren Struktur des aus Elementarfäden bestehenden Vlieses niederschlagen.

Die Vorrichtung zum Ölnebelabscheiden 7 besteht, wie in Figur 2 dargestellt, aus einem Gehäuse 12, das das Filterelement 1 aufnimmt. Das Gehäuse 12 der Vorrichtung zum Ölnebelabscheiden verfügt über eine Gaszuführöffnung 8 sowie über eine Gasabführöffnung 9. Wie in Figur 2 dargestellt, schließt sich an die Gaszuführöffnung 8 ein Filterelement 1 an, das in diesem Ausführungsbeispiel eine Reingasseite 2 und eine Rohgasseite 3 aufweist. Die Reingasseite 2 wird im Gehäuse 12 mittels zweier Dichtungen von der Rohgasseite getrennt. Im Bereich der Gaszuführöffnung 8 wird die Rohseite von der Reinseite durch die Dichtung 11 getrennt. Im Bereich der der Stirnseite des Lochblechs entgegengesetzten Seite wird die Rohgasseite von der Reingasseite mittels der Dichtung 14 abgedichtet, die zwischen Lochblech und Gehäusedeckel 13 angeordnet ist. Der Gehäusedeckel 13 ist mit dem Gehäuse 12 mittels eines Gewindes 15 verbindbar. In alternativen Ausgestaltungen sind Haken-, Schnapp- bzw. Bajonettverschlüsse denkbar. Das Filterelement 1 verfügt über rohgasseitige Mittel zum Stützen 4. Das Mittel zum Stützen 4 besteht aus einem einteiligen, rohrförmigen Lochblech, das von einem ersten Abscheidebereich 5 umgeben ist. Der Abscheidebereich 5 besteht aus gewickeltem Glasfasergarn. Um den den ersten Abscheidebereich 5 bildenden Glasfaserwickel ist ein zweiter Abscheidebereich 6 ringförmig angeordnet. Der zweite Abscheidebereich 6 besteht aus einem Vlies, das gleichzeitig die äußere Begrenzungshülle des Filterelementes 1 darstellt.

Die Gaszuführung erfolgt an der Stirnseite des Mittels zum Stützen 4. Über eine dort angebrachte Öffnung gelangt das Gasgemisch ins Innere des Filterelements 1, von wo aus das ölhaltige Gasgemisch radial über die an der Mantelfläche des Stützmittels 4 befindlichen Löcher in den dem Stützmittel folgenden Abscheidebereich 5 gelangt. Bereits durch das Passieren des Lochbleches des Stützmittels 4 erfährt das Gasgemisch eine Entmischung in der Weise, daß sich Öltropfen aus dem Gasgemisch abscheiden, die sich dann im ersten Abscheidebereich 5 entlang der Glasfasergarnstruktur zum Erdmittelpunkt bewegen. Nachdem das Gasgemisch das Lochblech 4 überwunden hat, gelangt es in den ersten Abscheidebereich 5 in dem sich größere Öltröpfchen an der Oberfläche der Glasfasergamwickelstruktur niederschlagen, die sich ebenfalls mittels der Schwerkraft vom Gasstrom wegbewegen. Im Anschluß daran gelangt der Gasstrom mit dem verbliebenen Ölanteil in den zweiten Abscheidebereich 6, in dem sich kleinere Öltröpfchen des Gasgemisches an der Oberfläche der wesentlich feineren Struktur des aus Elementarfäden bestehenden Vlieses niederschlagen und ebenfalls, getrieben von der Schwerkraft, den Weg zur Ölrückführungsöffnung suchen. Das derart von Öl befreite Gas gelangt mittels Gasabführöffnung 9 in den Ansaugkreislauf einer nicht dargestellten Verbrennungskraftmaschine.

Unterhalb der Ölabscheideelemente der Abscheidebereiche 5 und 6 weist die Vorrichtung zur Ölnebelabscheidung in ihrem Gehäuse 12 eine Ölrückführöffnung 10 auf, die, nachdem das ölhaltige Gas eine ausreichende Wegstrecke durch das Filterelement genommen hat, das abgeschiedene Öl dem Kreislauf der nicht dargestellten Verbrennungskraftmaschine zurückführt.

Die Anordnung von Ölrückführungsöffnung 10 im Gehäuse 12 wird in Fig. 2 dargestellt.

In einer alternativen Ausgestaltung verfügt das im Abscheidebereich verwendete Material über elektrostatische Eigenschaften.

In einer weiteren Ausgestaltung verhält sich das Material im Abscheidebereich in einer Variante hydrophil, in einer weiteren Variante hydrophob.

### Bezugszeichenliste

- 1: Filterelement
- 2: Reingasseite
- 3: Rohgasseite
- 4: Mittel zum Stützen
- 5: Abscheidebereich
- 6: Abscheidebereich
- 7: Vorrichtung zum Ölnebelabscheiden
- 8: Gaszuführöffnung
- 9: Gasabführöffnung
- 10: Ölrückführöffnung
- 11: Dichtung
- 12: Gehäuse
- 13: Gehäusedeckel
- 14: Dichtung
- 15: Gewinde

## Patentansprüche

1. Filtereinsatz zum Abscheiden von Öl aus einem Gasstrom, wobei der Filtereinsatz eine Reingasseite und eine Rohgasseite sowie gasdurchlässige Mittel zum Stützen aufweist und über wenigstens zwei unterschiedlich feine Abscheidebereiche verfügt, von denen der eine aus textilem Garn besteht, dadurch gekennzeichnet, daß das textile Garn gewickelt ist.

2. Filtereinsatz nach Anspruch 1, dadurch gekennzeichnet, daß ein Abscheidebereich aus zusammenhängenden Fasern oder Elementarfäden besteht.

3. Filtereinsatz nach Anspruch 1 oder 2, dadurch gekennzeichnet, daß das Material eines Abscheidebereichs aus Kunststoff, Metall oder Metalloxid besteht.

4. Filtereinsatz nach einem oder mehreren der vorgenannten Ansprüche, dadurch gekennzeichnet, daß das Material wenigstens eines Abscheidebereichs elektrostatische Eigenschaften aufweist.

5. Filtereinsatz nach einem oder mehreren der vorgenannten Ansprüche, dadurch gekennzeichnet, daß wenigstens ein Abscheidebereich hydrophobe oder hydrophile Eigenschaften aufweist.

6. Vorrichtung zum Ölnebelabscheiden (1) mit einem eine Gaszuführöffnung (4) und Gasabführöffnung (5) sowie eine Ölrückführöffnung(6) aufweisenden Gehäuse, dadurch gekennzeichnet, daß ein Filtereinsatz nach Anspruch 1 verwendet ist.

7. Vorrichtung nach dem vorhergehenden Anspruch, dadurch gekennzeichnet, daß die Vorrichtung zum Ölnebelabscheiden im Ansaugtrakt von Verbrennungskraftmaschinen einsetzbar ist.

8. Vorrichtung nach dem vorhergehenden Anspruch, dadurch gekennzeichnet, daß die Ölnebelabscheidevorrichtung zum Entölen der Blow-by-Gase einer Verbrennungskraftmaschine einsetzbar ist.

## Claims

1. Filter insert for separating oil from a gas stream, the filter insert including a filtered gas side and an unfiltered gas side as well as gas-permeable supporting means and having at least two separating regions of different fineness, one region of which is formed from textile yarn, characterised in that the textile yarn is wound.

2. Filter insert according to claim 1, characterised in that one separating region is formed from cohesive fibres or filaments.

3. Filter insert according to claim 1 or 2, characterised in that the material of one separating region is formed from plastics material, metal or metal oxide.

4. Filter insert according to one or more of the above-mentioned claims, characterised in that the material of at least one separating region has electrostatic properties.

5. Filter insert according to one or more of the above-mentioned claims, characterised in that at least one separating region has hydrophobic or hydrophilic properties.

6. Apparatus for separating oil mist (1), including a housing which has a gas supply aperture (8) and gas discharge aperture (9) as well as an oil return aperture (10), characterised in that a filter insert according to claim 1 is used.

7. Apparatus according to the preceding claim, characterised in that the apparatus for separating oil mist is insertable in the intake duct of internal combustion engines.

8. Apparatus according to the preceding claim, characterised in that the oil mist separating apparatus is usable to remove oil from the blow-by gases of an internal combustion engine.

## Revendications

1. Cartouche filtrante pour séparer l'huile contenue dans un courant gazeux, cette cartouche présentant un côté d'air épuré et un côté d'air brut, des moyens de soutien perméables aux gaz ainsi qu'au moins deux zones de séparation de finesses différentes, dont l'une est composée d'un fil textile,
caractérisée en ce que
le fil textile est enroulé.

2. Cartouche filtrante selon la revendication 1,
caractérisée en ce qu'
une zone de séparation est composée de fibres ou de fils élémentaires formant un milieu cohérent.

3. Cartouche filtrante selon la revendication 1 ou 2,
caractérisée en ce que
le matériau d'une zone de séparation est une matière plastique, un métal ou un oxyde métallique.

4. Cartouche filtrante selon l'une ou plusieurs des revendications précédentes,
caractérisée en ce que le matériau d'au moins une zone de séparation présente des propriétés électrostatiques.

5. Cartouche filtrante selon l'une ou plusieurs des revendications précédentes,
caractérisée en ce qu'
au moins une zone de séparation présente des propriétés hydrophobes ou hydrophiles.

6. Dispositif pour séparation d'huile (1) comportant un boîtier équipé d'une amenée de gaz (4), d'une sortie de gaz (5) et d'une ouverture de récupération d'huile (6),
caractérisé en ce que
le dispositif utilise une cartouche filtrante selon la revendication 1.

7. Dispositif selon la revendication 6,
caractérisé en ce que
le dispositif séparateur d'huile peut être utilisé dans le circuit d'aspiration de moteurs à combustion interne.

8. Dispositif selon la revendication 7,
caractérisé en ce que
le dispositif séparateur d'huile peut être utilisé pour débarrasser d'huile le « Blow-by-Gase » d'un moteur à combustion interne.
